# EUROPEAN PATENT APPLICATION

(11) **EP 4 821 331 A1**
(43) Date of publication of application: **14.10.2026**
(21) Application number: 26167775.1
(22) Date of filing: 25.03.2026
(51) Int. Cl.: A01B 59/00, A01B 59/042, A01M 7/00, B60D 1/64, A01C 15/00

(54) **TENDER ARM SYSTEM AND TENDER TRAILER WITH SUCH**

(30) Priority: 08.04.2025 US 202563785124 P; 23.03.2026 US 202619575296
(71) Applicant: Deere & Company, Moline, IL 61265 (US)
(72) Inventor: Johnson, Micah E., 68163 Mannheim (DE); Saltillo, Carlos Arroyo, 68163 Mannheim (DE); Larsen, Lucas B., 68163 Mannheim (DE); Miller, Michael M., 68163 Mannheim (DE); Thompson, Austin N., 68163 Mannheim (DE)
(74) Representative: Reichert, Christian

(57) **Abstract**

A tender arm system for use with a work machine (10) is disclosed. The tender arm system comprising: a tender arm assembly (220, 820) configured to guide a hose (240, 840); and a coupling system (250, 850) supported by the tender arm assembly (220, 820) that is configured to retract the hose (240, 840) to locate a first coupler (242, 842) connected to the hose (240, 840) relative to a second coupler (344) supported by the work machine (10) and to facilitate connection between the first coupler (242, 842) and the second coupler (344), wherein the coupling system (250, 850) includes a carrier structure (610, 710) coupled to the tender arm assembly (220, 820) proximate an end thereof that is arranged for interaction with the first coupler (242, 842), and wherein the carrier structure (610, 710) includes a carrier bracket (630) sized to at least partially receive the first coupler (242, 842) and a ramp (650, 750) pivotally coupled to the carrier bracket (630) that extends oblique to the carrier bracket (630). Furthermore, a tender trailer (200, 800) for a work machine (10) with such a tender arm system is disclosed.

## Description

### FIELD OF THE DISCLOSURE

The present disclosure relates, generally, to tender trailers adapted for use with agricultural machines, and, more specifically, to coupling systems to facilitate connection of tender trailers to agricultural machines.

### BACKGROUND

In some configurations, operation of agricultural machines (e.g., agricultural sprayers) may require connection to a tender trailer or tender vehicle. Such connection may be established through couplers provided on the agricultural machine and the tender trailer. Systems, devices, and/or methods to facilitate connection between agricultural machines and tender trailers remain an area of interest.

### SUMMARY

The present disclosure may comprise one or more of the following features and combinations thereof.

In one aspect of the present disclosure, a tender trailer for an agricultural machine may include a chassis, a tender arm assembly coupled to the chassis that guides a hose extending from the tender trailer toward the agricultural machine, and a coupling system coupled to the hose and supported by the tender arm assembly. The coupling system may be configured to retract the hose toward the tender trailer to locate a first coupler connected to the hose relative to a second coupler disposed on the agricultural machine and facilitate connection between the first coupler and the second coupler.

In some embodiments, the tender arm assembly may include a tender arm and a plurality of guide brackets coupled to the tender arm and arranged to guide the hose along a length of the tender arm, and the coupling system may include at least one roller coupled to at least one of the plurality of guide brackets that is arranged for interaction with the hose to facilitate retraction thereof toward the tender trailer.

In some embodiments, the at least one roller may include one roller defining a V-shaped profile.

In some embodiments, the at least one roller may include a pair of rollers spaced from one another in a vertical direction to receive the hose therebetween, and each one of the pair of rollers may define a V-shaped profile.

In some embodiments, the pair of rollers may be coupled to the at least one of the plurality of guide brackets to permit adjustment of a distance between the pair of rollers in the vertical direction.

In some embodiments, the at least one of the plurality of guide brackets may include a first guide bracket and a second guide bracket aligned with the first guide bracket along the length of the tender arm, each one of the pair of rollers may be coupled to the first guide bracket and the second guide bracket at opposite ends thereof, a first biasing element may extend along the first guide bracket from one of the pair of rollers to the other of the pair of rollers to bias the pair of rollers toward one another in the vertical direction, and a second biasing element may extend along the second guide bracket from one of the pair of rollers to the other of the pair of rollers to bias the pair of rollers toward one another in the vertical direction.

In some embodiments, the coupling system may include at least one tensioning cord coupled to the hose and the tender arm assembly to facilitate retraction of the hose toward the tender trailer. In some embodiments, the tender arm assembly may include a tender arm and a plurality of guide brackets coupled to the tender arm and arranged to guide the hose along a length of the tender arm, and the at least one tensioning cord may include a plurality of tensioning cords each coupled to the hose and at least one of the plurality of guide brackets to facilitate retraction of the hose toward the tender trailer.

In some embodiments, the tender arm assembly may include a tender arm and a plurality of guide brackets coupled to the tender arm and arranged to guide the hose along a length of the tender arm, and the coupling system may include a spring retention bracket coupled to the tender arm adjacent one of the plurality of guide brackets and a spring that abuts the spring retention bracket and at least partially surrounds the hose to facilitate retraction of the hose toward the tender trailer.

In some embodiments, the spring may be coupled to the hose by a spring retention collar at least partially surrounding the hose such that movement of the hose relative to the tender arm varies a length of the spring.

According to another aspect of the present disclosure, a tender trailer for an agricultural machine may include a chassis, a tender arm assembly coupled to the chassis that guides a hose extending from the tender trailer toward the agricultural machine, and an automatic coupling system coupled to the hose and supported by the tender arm assembly. The tender arm assembly may include a tender arm and a plurality of guide brackets coupled to the tender arm that are arranged to guide the hose along a length of the tender arm. The automatic coupling system may be configured to locate a first coupler connected to the hose relative to a second coupler disposed on the agricultural machine and facilitate connection between the first coupler and the second coupler. The automatic coupling system may include an actuator pivotally coupled to the chassis and a tender arm adjustment linkage coupled to the actuator and the tender arm such that the tender arm adjustment linkage is spaced from the plurality of guide brackets along the tender arm.

In some embodiments, the actuator may be operable to adjust a position of the tender arm in a vertical direction through the tender arm adjustment linkage to locate the first coupler relative to the second coupler.

In some embodiments, the actuator may be a linear electric actuator.

In some embodiments, the tender arm adjustment linkage may include an adjustment knuckle pivotally coupled to the actuator, a first mount plate affixed to one surface of the tender arm, a second mount plate affixed to another surface of the tender arm opposite the one surface, a first link interconnecting the knuckle and the first mount plate, and a second link interconnecting the knuckle and the second mount plate.

In some embodiments, the tender arm adjustment linkage may be coupled to the tender arm such that the hose is arranged between the first link and the second link and between the tender arm and the adjustment knuckle.

In some embodiments, the automatic coupling system may include a carrier structure coupled to the tender arm proximate an end thereof that is arranged for interaction with the first coupler and spaced from the plurality of guide brackets along the tender arm, and the carrier structure may include a carrier bracket sized to at least partially receive the first coupler, a ramp pivotally coupled to the carrier bracket that extends oblique to the carrier bracket, and a turnbuckle coupled to the tender arm and the ramp to adjust a pitch of the ramp relative to the carrier bracket.

In some embodiments, the first coupler may include a coupling flange and a pair of guide flaps each coupled to the coupling flange at one end and to a corresponding guide rod at another end opposite the one end, and the guide rods may be slidable along the ramp to facilitate retraction of the hose toward the tender trailer.

According to yet another aspect of the present disclosure, a tender trailer for an agricultural machine may include a chassis, a tender arm assembly coupled to the chassis that guides a hose extending from the tender trailer toward the agricultural machine, and a coupling system coupled to the hose and supported by the tender arm assembly. The tender arm assembly may include a tender arm and a plurality of guide brackets coupled to the tender arm that are arranged to guide the hose along a length of the tender arm. The coupling system may be configured to locate a first coupler connected to the hose relative to a second coupler disposed on the agricultural machine and facilitate connection between the first coupler and the second coupler. The coupling system may include a stand assembly coupled to the tender arm proximate an end thereof that is arranged to support the first coupler for connection to the second coupler.

In some embodiments, the stand assembly may include an upright stand to contact a support surface and a stand mount coupled to the tender bar and the upright stand, and at least one of the plurality of guide brackets may be arranged in direct contact with the stand mount.

In some embodiments, the stand mount may include a stand ramp extending oblique to the upright stand, the first coupler may include a coupling flange and a pair of guide flaps each coupled to the coupling flange at one end and to a corresponding guide rod at another end opposite the one end, and the guide rods may be slidable along the stand ramp to facilitate retraction of the hose toward the tender trailer.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a perspective view of an agricultural sprayer;
FIG. 2 is a side view of a tender trailer adapted for use with an agricultural machine showing a tender arm assembly supporting a coupling system in a stowed position;
FIG. 3 is a perspective view of the tender arm assembly of FIG. 2 in a deployed position in which the coupling system facilitates connection between the tender trailer and the agricultural machine;
FIG. 4 is a perspective view similar to FIG. 3 showing one or more tensioning cords of the coupling system coupled to a hose guided by the tender arm assembly and the tender arm assembly;
FIG. 5 is a perspective view of the coupling system and the tender arm assembly shown in FIGS. 2-4 with the tender trailer and the agricultural machine omitted for the sake of simplicity;
FIG. 6 is a magnified view of FIG. 5 showing a carrier structure supported by the tender arm assembly that is arranged for interaction with a coupler connected to the hose;
FIG. 7 is a perspective view of another carrier structure adapted for use with the coupling system and the tender arm assembly shown in FIGS. 2-4;
FIG. 8 is a perspective view of another tender arm assembly of another tender trailer supporting another coupling system in a deployed position in which the coupling system facilitates connection between the tender trailer and an agricultural machine;
FIG. 9 is a perspective view of the coupling system and the tender arm assembly shown in FIG. 8 with the tender trailer omitted for the sake of simplicity; and
FIG. 10 is a perspective view showing one or more tensioning cords of the coupling system shown in FIG. 8 coupled to a hose guided by the tender arm assembly and the tender arm assembly.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features, such as those representing devices, modules, instructions blocks and data elements, may be shown in specific arrangements and/or orderings for ease of description. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

In some embodiments, schematic elements used to represent blocks of a method may be manually performed by a user. In other embodiments, implementation of those schematic elements may be automated using any suitable form of machine-readable instruction, such as software or firmware applications, programs, functions, modules, routines, processes, procedures, plug-ins, applets, widgets, code fragments and/or others, for example, and each such instruction may be implemented using any suitable programming language, library, application programming interface (API), and/or other software development tools. For instance, in some embodiments, the schematic elements may be implemented using Java, C++, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others, for example.

Further, in the drawings, where connecting elements, such as solid or dashed lines or arrows, are used to illustrate a connection, relationship, or association between or among two or more other schematic elements, the absence of any such connection elements is not meant to imply that no connection, relationship, or association can exist. In other words, some connections, relationships, or associations between elements may not be shown in the drawings so as not to obscure the disclosure. In addition, for ease of illustration, a single connecting element may be used to represent multiple connections, relationships, or associations between elements. For example, where a connecting element represents a communication of signals, data or instructions, it should be understood by those skilled in the art that such element may represent one or multiple signal paths (e.g., a bus), as may be needed, to effect the communication.

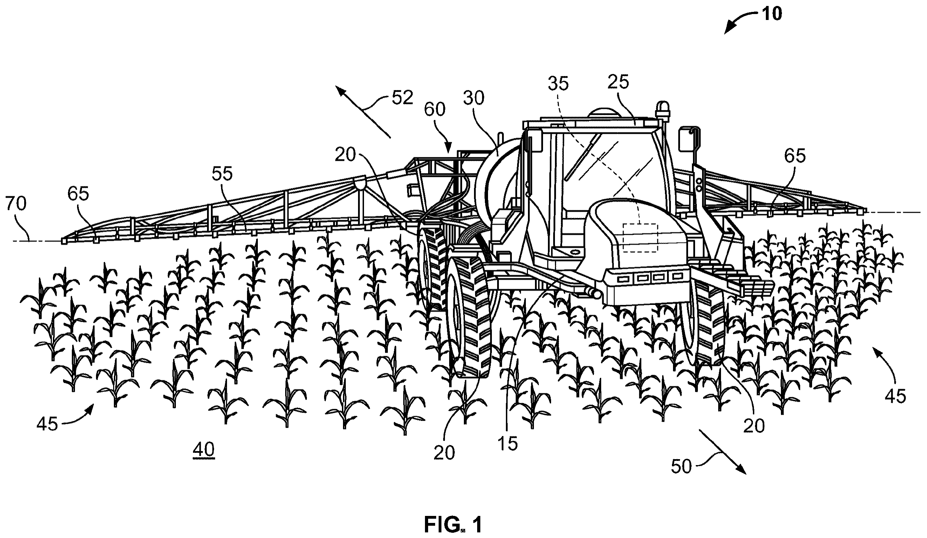

Referring to FIG. 1, an agricultural machine/vehicle (e.g., an agricultural sprayer 10) is shown including a chassis 15 having a plurality of traction members (e.g., wheels 20) to support a cab 25, one or more product tanks 30, and a power unit 35 (e.g., an engine, transmission, etc.) above an agricultural surface or ground 40. In this illustrated implementation, the ground 40 may be that of a crop field. The product tanks 30 may be configured to store agricultural product (e.g., liquid fertilizer, liquid pesticide, liquid fungicide, dry/solid forms of nutrients, dry/solid forms of protection products, agricultural seeds, etc.) to be distributed onto crops 45 growing from the ground 40 or directly onto the ground 40. The power unit 35 may provide mechanical, electrical, and hydraulic power to components of the sprayer 10. For example, the power unit 35 may drive at least one of the wheels 20 to move the sprayer 10 across the ground 40 in a forward direction 50 or a rearward direction 52. Additionally, in some implementations, the power unit 35 may operably drive a delivery device (e.g., a pump) to dispense the agricultural product within the product tanks 30 onto the ground 40. In other implementations, the traction members can be continuous tracks operable to move the sprayer 10 relative to the ground 40.

The sprayer 10 may include a support boom 55 coupled to the chassis 15 behind the product tanks 30 and the cab 25. In this implementation, the spray boom 55 is a rear-mounted spray boom positioned behind the cab 25 and product tanks 30. Of course, in other implementations, it should be appreciated that the support boom 55 may be positioned in front of the cab 25 and the product tanks 30 in a front-mounted configuration. In any case, a hydraulic assembly 60 (e.g., hydraulic cylinders) may be coupled to the chassis 15 and the support boom 55 that is operable to raise and lower the support boom 55 relative to the chassis 15 and the ground 40. Spray nozzles 65 may be positioned along a longitudinal axis 70 of the support boom 55 with each spray nozzle 65 fluidly coupled to at least one or more of the product tanks 30. The spray nozzles 65 may be operable to dispense/spray the agricultural product stored from within at least one holding tank 30 onto the ground 40 and the crops 45.

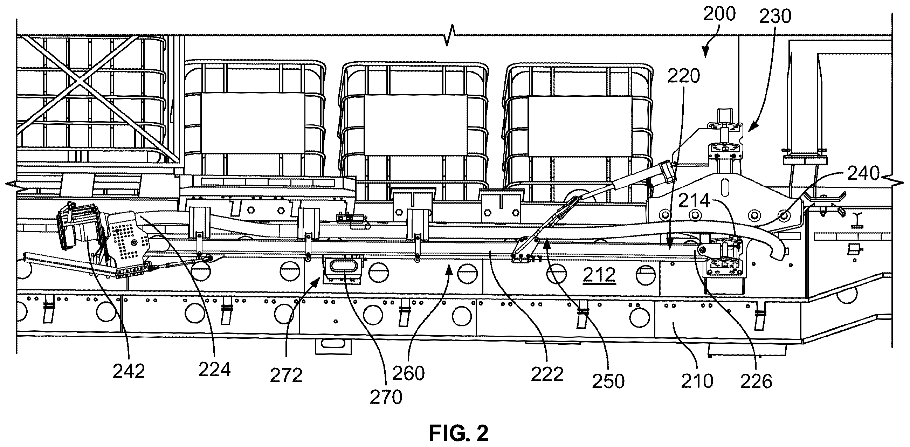

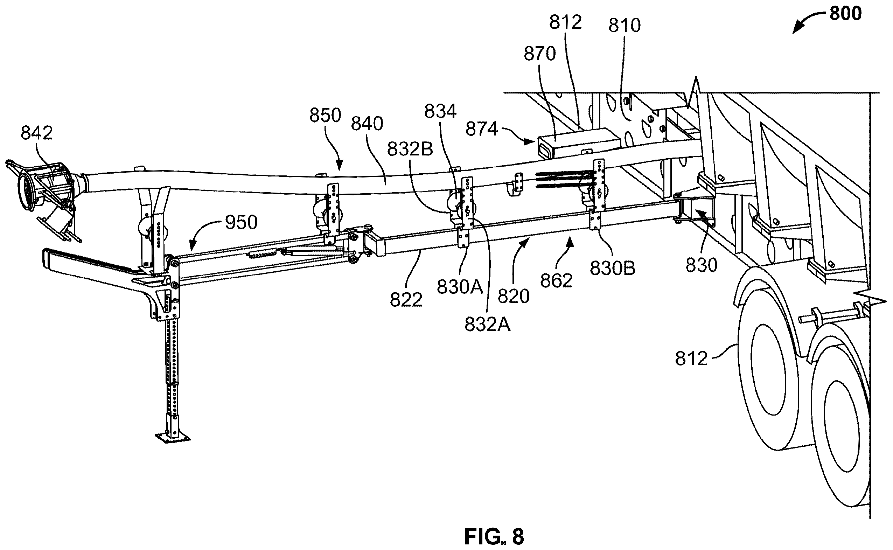

In some configurations, an agricultural machine (e.g., the sprayer 10 or a sprayer 310) may be adapted for use with a tender trailer, such as the tender trailer 200 described below with reference to FIGS. 2-4 or the tender trailer 800 described below with reference to FIGS. 8-10, for example. In the context of agriculture and spraying operations, the tender trailer 200 may be embodied as a specialized trailer configured to perform various functions such as storing, mixing, and dispensing of liquids (e.g., fertilizers and/or pesticides) to the sprayer 10 or the sprayer 310. In such embodiments, the tender trailer 200 may include one or more product tanks (not shown) for supplying fluid to the sprayer 10 or the sprayer 310. As a result, the tender trailer 200 may be said to "tend" or support the sprayer 10 or the sprayer 310 in use thereof and provide a mobile liquid source to minimize downtime of the sprayer 10 or the sprayer 310 during refill periods. As described in greater detail below, in use of the tender trailer 200 and the sprayer 10 or the sprayer 310, a hose 240 carried by the tender trailer 200 is fluid coupled to the sprayer 10 or the sprayer 310 using one or more coupling systems envisioned by the present disclosure.

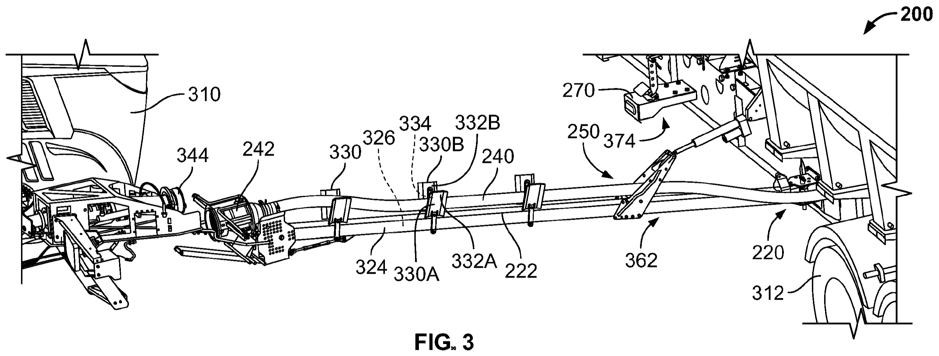

Referring now to FIGS. 2 and 3, the illustrative tender trailer 200 includes a chassis or mainframe 210 supporting a plurality of wheels 312 (only one wheel 312 is shown in FIG. 3) for movement relative to the ground 40. The tender trailer 200 includes a tender arm assembly 220 movably coupled to the chassis 210 via a hitch assembly 230 affixed to the chassis 210. The tender arm assembly 220 illustratively guides the hose 240 that extends from the tender trailer 200 toward the sprayer 310. The hose 240 is configured to conduct fluid supplied by the tender trailer 200 to the sprayer 310 in use thereof.

In the illustrative embodiment, as best seen in FIG. 3, the tender arm assembly 220 supports a coupling system 250 that is coupled to the hose 240. As evident from the discussion that follows, the coupling system 250 is configured to retract the hose 240 toward the tender trailer 200 to locate a coupler 242 (e.g., a female coupler) connected to the hose 240 relative to a coupler 344 (e.g., a male coupler) disposed on the sprayer 310. In doing so, the coupling system 250 facilitates repeated and consistent connection between the couplers 242, 344 in use of the tender trailer 200 and the sprayer 310. The coupling system 250 includes a collection of devices each configured to assist in retracting the hose 240 toward the tender trailer 200.

In some embodiments, the coupling system 250 automatically retracts the hose 240 such that the coupler 242 has a predetermined or reference position relative to the coupler 344 once the coupler 242 has been de-coupled or disconnected from the coupler 344. In such embodiments, the coupling system 250 may be embodied as an automatic or semi-automatic retractable coupling system. Additionally, in some embodiments, the coupling system 250 enables six degrees of freedom of movement (i.e., three-dimensional translation and rotation) of the couplers 242, 344 relative to one another to provide a flexible and maneuverable connection therebetween in use of the tender trailer 200 and the sprayer 310.

The tender arm assembly 220 is illustratively movable relative to the chassis 210 between a stowed position 260 (see FIG. 2) and a deployed position 362 (see FIG. 3). In the stowed position 260, a tender arm 222 of the tender arm assembly 220 is coupled to a sidewall 212 of the chassis 210 via a latch mechanism 270 when the latch mechanism 270 is in an engaged state 272. In the engaged state 272 thereof, the latch mechanism 270 constrains the tender arm 222 against rotation relative to the sidewall 212. It should be appreciated that the couplers 242, 344 are de-coupled from one another in the stowed position 260 of the tender arm assembly 220. The tender arm 222 extends parallel or substantially parallel to the sidewall 212 in the stowed position 260 of the tender arm assembly 220.

In the deployed position 362, the tender arm 222 is de-coupled from the sidewall 212 of the chassis 210 when the latch mechanism 270 is in a disengaged state 374. In the disengaged state 374 thereof, the latch mechanism 270 permits the tender arm 222 to rotate (i.e., to swing outwardly) relative to the sidewall 212. The couplers 242, 344 are connected to one another when the tender arm assembly 220 is in the deployed position 362 as shown in FIG. 3. The tender arm 222 extends perpendicular or substantially perpendicular to the sidewall 212 in the deployed position 362 of the tender arm assembly 220. In some embodiments, rotation of the tender arm 222 relative to the sidewall 212 is driven by an actuator (not shown) included in, or otherwise coupled to, the hitch assembly 230.

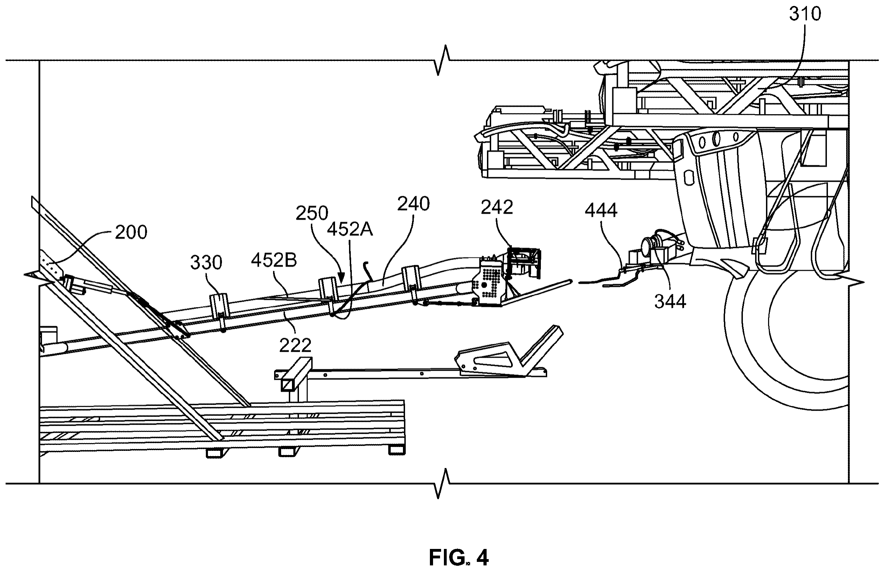

Referring now to FIGS. 3 and 4, the illustrative tender arm assembly 220 includes guide brackets 330 coupled to the tender arm 222 along the length thereof. The guide brackets 330 are arranged to guide the hose 240 along the length of the tender arm 222. In the illustrative arrangement, the guide brackets 330 are aligned in pairs along the length of the tender arm 222 and the pairs of aligned guide brackets 330 are spaced apart from one another along the length of the tender arm 222.

Using the pair of aligned guide brackets 330A, 330B as an example, the guide bracket 330A is affixed to a side 324 of the tender arm 222 and the guide bracket 330B is affixed to a side 326 (shown in phantom) of the tender arm 222 arranged opposite the side 324. The guide brackets 330A, 330B include respective guide tabs 332A, 332B that extend upwardly away from the tender arm 222 and are oblique with respect to the tender arm 222. Interior surfaces (not shown) of the guide tabs 332A, 332B illustratively cooperate to define a tapered, V-shaped void therebetween in which the hose 240 is received. In some embodiments, the guide tabs 332A, 332B are planar or substantially planar structures having generally rectangular shapes. In other embodiments, the guide tabs 332A, 332B may include one or more arcuate surfaces and take the shape of other suitable geometric forms.

In some embodiments, again using the pair of aligned guide brackets 330A, 330B as an example, one or more rollers 334 (shown in phantom) may be coupled to the interior surfaces of the guide tabs 332A, 332B and disposed in the void formed between the interior surfaces. More specifically, the roller(s) 334 may be disposed in the void such that the roller(s) 334 contact and guide the hose 240 to facilitate retraction of the hose 240 toward the tender trailer 200 and the tender arm assembly 220. In some embodiments, the roller(s) 334 may include one roller coupled to one of the guide tabs 332A, 332B that defines a V-shaped profile. In other embodiments, the roller(s) 334 may include a pair of rollers each coupled to one of the guide tabs 332A, 332B and each defining a V-shaped profile. In other embodiments still, the roller(s) 334 may be omitted entirely. In some embodiments, as shown in FIG. 4, the coupling system 250 includes at least one tensioning cord 452 coupled to the hose 240 and the tender arm assembly 220 to facilitate retraction of the hose 240 toward the tender trailer 200. The tensioning cord(s) 452 are configured to apply tension to the hose 240 to draw the hose 240 toward the tender trailer 200 and the tender arm assembly 220. In some embodiments, the tensioning cord(s) 452 are embodied as bungee cords, tension or ratchet straps, or the like.

The illustrative tensioning cords 452 include a tensioning cord 452A and a tensioning cord 452B as shown in FIG. 4. The tensioning cord 452A may be affixed to one of the guide brackets 330 and a structure (e.g., a bracket, ring, collar, hook, tab, or the like) coupled to the hose 240, whereas the tensioning cord 452B may be affixed to another one of the guide brackets 330 and another structure coupled to the hose 240. In some embodiments, the tensioning cords 452 may include one or more tensioning cords coupled between the hose 240 and the tender arm assembly 220 at various locations along the length of the tender arm 222 to retract the hose 240 toward the tender trailer 200 and the tender arm assembly 220 as discussed above.

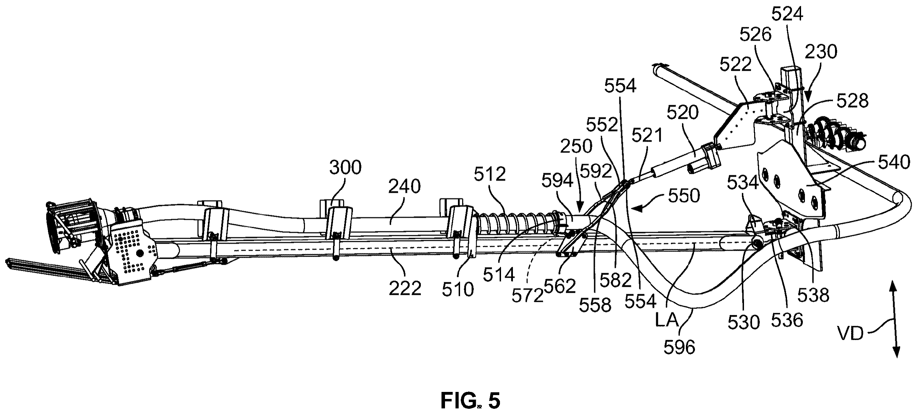

Referring now to FIG. 5, in the illustrative embodiment, the coupling system 250 includes a spring retention bracket 510 coupled to the tender arm 222 adjacent one of the guide brackets 330 and arranged along a longitudinal axis LA extending parallel to the tender arm 222. Additionally, the coupling system 250 includes a spring 512 that abuts the spring retention bracket 510 and at least partially surrounds the hose 240. In some embodiments, the spring 512 is affixed to the spring retention bracket 510 and coupled to the hose 240 by a spring retention collar 514 at least partially surrounding the hose 240. Consequently, in some embodiments, movement of the hose 240 relative to the tender arm 222 varies a length of the spring 512. In any case, in the illustrative embodiment, the spring 512 is configured to apply a biasing force to the hose 240 to facilitate retraction of the hose 240 toward the tender trailer 200. It should be appreciated that the spring 512 may be embodied as any biasing element or collection of biasing elements adapted to urge the hose 240 toward the tender trailer 200 and facilitate retraction thereof as discussed above.

The illustrative coupling system 250 includes an actuator 520 pivotally coupled to the hitch assembly 230 via a pivot knuckle 522. The pivot knuckle 522 is pivotally coupled to a pin 524 that is held by a bracket 526 which is affixed to an upright mount post 528 of the hitch assembly 230. In some embodiments, the upright mount post 528 is affixed to the chassis 210 in direct contact with the sidewall 212.

The actuator 520 is illustratively coupled to a tender arm adjustment linkage 550 as best seen in FIGS. 2-5. The tender arm adjustment linkage 550 is coupled to the tender arm 222 such that the tender arm adjustment linkage 550 is spaced from the guide brackets 330 along the tender arm 222. In particular, at least a portion of the tender arm adjustment linkage 550 is arranged between the spring retention bracket 510 and the hitch assembly 230 along the longitudinal axis LA.

In the illustrative arrangement, the actuator 520 is configured to adjust a position of the tender arm 222 in a vertical direction VD through the tender arm adjustment linkage 550 to locate the coupler 242 relative to the coupler 344. It should be appreciated that the actuator 520 may be embodied as any device or collection of devices configured to raise or lower the tender arm 222 in the vertical direction VD through the tender arm adjustment linkage 550 to position the coupler 242 for connection to the coupler 344. Additionally, it should be appreciated that the actuator 520 may be controlled (e.g., from a cabin of the sprayer 310) to remotely set a height of the tender arm 222 in the vertical direction VD. In some embodiments, the actuator 520 may be embodied as an electric actuator driven by a controller (not shown), such as a linear electric actuator or cylinder, for example. In other embodiments, the actuator 520 may be embodied as another suitable actuator, such as a single-acting or double-acting hydraulic or pneumatic cylinder, for instance. Further, in some embodiments, a turnbuckle or other suitable tensioning apparatus may be employed in lieu of the actuator 520.

In the illustrative embodiment, the tender arm adjustment linkage 550 includes an adjustment knuckle 552, a mount plate 562, a mount plate 572 (shown in phantom), a link 582, and a link 592. The adjustment knuckle 552 is pivotally coupled to, and in direct contact with, a rod 521 of the actuator 520. The mount plate 562 is affixed to the side 324 of the tender arm 222 whereas the mount plate 572 is affixed to the side 326 of the tender arm 222. The link 582 interconnects the adjustment knuckle 552 and the mount plate 562 whereas the link 592 interconnects the adjustment knuckle 552 and the mount plate 572.

In some embodiments, the adjustment knuckle 552 includes fingers or wires 554 coupled to the rod 521 of the actuator 520 and a web 558 coupled to the fingers 554 and to each of the links 582, 592. The fingers 554 may be spaced apart from one another to define at least one slot 556 therebetween. In some embodiments, in the event the sprayer 310 inadvertently drives into the tender arm 222, for example, the fingers 554 and/or the slot 556 may act as a fuse to interrupt a mechanical or electrical coupling, such as an electrical connection established between the actuator 520 and a controller, for instance.

In the illustrative embodiment, the mount plate 562 is affixed to the side 324 of the tender arm 222 and the mount plate 572 is affixed to the side 326 of the tender arm 222 such that the mount plates 562, 572 are aligned or substantially aligned along the longitudinal axis LA. The links 582, 592 are coupled to the corresponding mount plates 562, 572 and the adjustment knuckle 552 such that the tender arm adjustment linkage 550 defines an opening 594 through which the hose 240 extends. As such, the hose 240 is arranged in the opening 594 between the links 582, 592 and between the tender arm 222 and the adjustment knuckle 552.

In some embodiments, the tender arm 222 may be pivotally coupled to the hitch assembly 230 via a pivot joint 530. The pivot joint 530 may be defined by a pivot guide 534 that is pivotally coupled to the tender arm 222 to permit pivotal movement of the tender arm 222 relative to the pivot guide 534 when the position of the tender arm 222 is adjusted in the vertical direction VD via the actuator 520 and the tender arm adjustment linkage 550. The pivot guide 534 may be pivotally coupled to a pin 536 that is held by a bracket 538 which is affixed to a main mount plate 540 of the hitch assembly 230. In some embodiments, the main mount plate 540 may be affixed to the chassis 210 in direct contact with the sidewall 212. Additionally, in some embodiments, the main mount plate 540 and the upright mount post 528 may be coupled to one another and aligned or substantially aligned along the longitudinal axis LA.

In some embodiments, an actuator may be coupled to the tender arm 222 in close proximity to the pivot joint 530 to drive rotation of the tender arm 222 relative to the sidewall 212 of the chassis 210 between the stowed and deployed positions 260, 362 discussed above. The actuator may be embodied as an electric actuator driven by a controller or another suitable actuator, such as a single-acting or double-acting hydraulic or pneumatic cylinder, for instance. In other embodiments, however, the actuator may be omitted and rotation of the tender arm 222 relative to the sidewall 212 of the chassis 210 between the stowed and deployed positions 260, 362 may be driven manually by a user or operator. In such embodiments, a lock pin 214 (best seen in FIG. 2) may be used to selectively prevent manual rotation of the tender arm 222 relative to the sidewall 212. In other embodiments still, a turnbuckle or other suitable tensioning apparatus may be employed in lieu of the actuator 520.

As shown in FIG. 5, excess slack 596 may be present in the hose 240 when the hose 240 is supported by the tender arm assembly 220. In some embodiments, the slack 596 in the hose 240 may facilitate retraction of the hose 240 toward the tender trailer 200. In such embodiments, the hose 240 may be supported by the chassis 210 of the tender trailer 200 to ensure slack 596 is present therein.

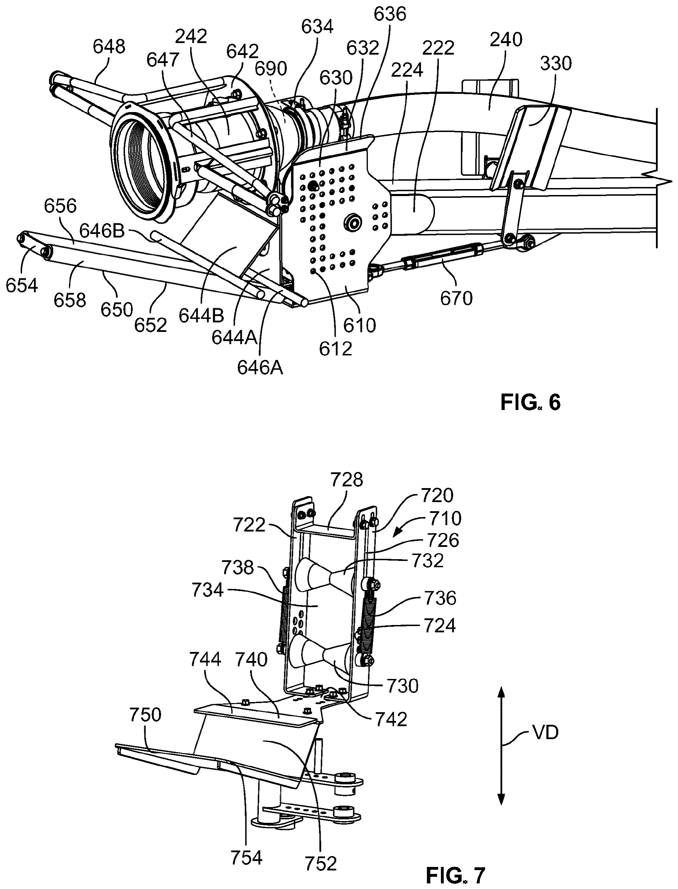

Referring now to FIG. 6, in the illustrative embodiment, the coupling system 250 includes a carrier structure 610 coupled to the tender arm 222 proximate an end 224 thereof. The end 224 is arranged opposite an end 226 of the tender arm 222 that is coupled to the hitch assembly 230. In some embodiments, the carrier structure 610 is pivotally coupled to the tender arm 222 to permit pivotal movement of the carrier structure 610 relative to the tender arm 222 when positioning the coupler 242 relative to the coupler 344. Additionally, in some embodiments, the carrier structure 610 may include a housing or casing 612 configured to at least partially confine and/or enclose the end 224 of the tender arm 222. In any case, the carrier structure 610 is spaced from the guide brackets 330 along the tender arm 222.

The illustrative carrier structure 610 is arranged for interaction with the coupler 242 when positioning the coupler 242 relative to the coupler 344. More specifically, the carrier structure 610 is configured to at least partially receive the coupler 242 and locate the coupler 242 relative to the coupler 344. The carrier structure 610 includes a carrier bracket 630 sized to at least partially receive the coupler 242, a ramp 650 pivotally coupled to the carrier bracket 630, and a turnbuckle 670 coupled to the tender arm 222 and the ramp 650. Additionally, in some embodiments, the carrier structure 610 includes one or more rollers 690 (shown in phantom) supported by the carrier bracket 630.

The illustrative carrier bracket 630 includes sides 632, 634 that are spaced apart from one another to define a passageway 636 at an upper periphery of the carrier bracket 630 in the vertical direction VD. The coupler 242 is at least partially received in the passageway 636. In some embodiments, direct contact between the coupler 242 and the carrier bracket 630 when the coupler 242 is received in the passageway 636 may resist movement of the hose 240 along the longitudinal axis LA toward the tender trailer 200. As such, in some embodiments, direct contact between the coupler 242 and the carrier bracket 630 when the coupler 242 is received in the passageway 636 may limit retraction of the hose 240 toward the tender trailer 200.

The illustrative ramp 650 is pivotally coupled to the carrier bracket 630 such that the ramp 650 extends outwardly away from, and oblique to, the carrier bracket 630. The ramp 650 is coupled to the carrier bracket 630 at a lower periphery of the carrier bracket 630 in the vertical direction VD. The ramp 650 includes interconnected guide bars 652, 654, 656 that define a rectangular, elongated shape of the ramp 650. In the illustrative embodiment, the guide bars 652, 654, 656 cooperate to at least partially enclose a slot 658. In some embodiments, one or more of the guide bars 652, 654, 656 may be constructed from, or covered by, low friction material to facilitate translation of the coupler 242 along the ramp 650 when locating the coupler 242 relative to the coupler 344. In other embodiments, however, the ramp 650 may include a continuous platform devoid of the slot 658 and the guide bars 652, 654, 656 may be omitted entirely. Regardless, the ramp 650 provides a guide structure for repeatedly and reliably positioning the coupler 242 with the aid of gravity relative to the coupler 344.

The illustrative turnbuckle 670 is embodied as any device or collection of devices configured to apply an adjustable tensile load to the carrier bracket 630. Consequently, the coupling of the carrier bracket 630 to the tender arm 222 via the turnbuckle 670 enables a pitch of the ramp 650 to be adjusted relative to the carrier bracket 630. Such pitch adjustment may facilitate more precise positioning of the coupler 242 relative to the coupler 344 in use of the tender trailer 200 and the sprayer 310.

The roller(s) 690 may be coupled to interior surfaces (not shown) of the sides 632, 634 such that the roller(s) 690 are arranged in the passageway 636 of the carrier bracket 630. As a result, in some embodiments, when the hose 240 is retracted toward the tender trailer 200, the coupler 242 may directly contact the roller(s) 690. Direct contact between the coupler 242 and the roller(s) 690 may therefore limit retraction of the hose 240 toward the tender trailer 200, at least in some embodiments.

The illustrative coupler 242 includes an annular coupling flange 642 and guide flaps 644A, 644B coupled to the coupling flange 642. More specifically, each guide flap 644A, 644B is coupled to the coupling flange 642 at one end thereof and to a corresponding guide rod 646A, 646B at another end opposite the one end. The guide rods 646A, 646B are illustratively slidable along the ramp 650 to facilitate retraction of the hose 240 toward the tender trailer 200 and positioning of the coupler 242 relative to the coupler 344 in use of the tender trailer 200 and the sprayer 310. The guide flaps 644A, 644B are arranged oblique to one another and cooperate to define a V-shaped exterior profile. The coupler 242 also includes handles 647 coupled to the annular flange 642 and handles 648 coupled to the annular flange 642 opposite the handles 647. The handles 647, 648 extend outwardly away from the coupling flange 642 on opposite sides thereof and are configured to be grasped by a grabbing mechanism 444 (see FIG. 4) of the sprayer 310 to advance the coupler 242 toward the coupler 344 when connecting the couplers 242, 344.

Referring now to FIG. 7, a carrier structure 710 may be coupled to the tender arm 222 proximate the end 224. In some embodiments, the carrier structure 710 may be coupled to the tender arm 222 in lieu of the carrier structure 610 and included in the coupling system 250 as an alternative to the carrier structure 610. As such, like the carrier structure 610, the carrier structure 710 is configured to at least partially receive the coupler 242 and locate the coupler 242 relative to the coupler 344 in use of the tender trailer 200 and the sprayer 310. In the illustrative embodiment, the carrier structure 710 includes guide brackets 720, 722, rollers 730, 732 each coupled to the guide brackets 720, 722, a base plate 740 coupled to the guide brackets 720, 722, and a ramp 750 coupled to the base plate 740.

Each of the guide brackets 720, 722 is illustratively embodied as an L-shaped guide bracket coupled to the base plate 740. When the carrier structure 710 is coupled to the tender arm 222, the guide brackets 720, 722 are aligned or substantially aligned along the length of the tender arm 222, at least in some embodiments. The illustrative guide brackets 720, 722 are identical or substantially identical to one another. Using the guide bracket 720 as an example, the guide bracket 720 is formed to include a cluster of apertures 724 and a slot 726 arranged above the apertures 724 in the vertical direction VD. In the illustrative embodiment, the guide brackets 720, 722 are coupled to one another at an upper periphery thereof in the vertical direction VD by a C-shaped bridge 728.

In the illustrative embodiment, each one of the rollers 730, 732 is coupled to the guide bracket 720 and to the guide bracket 722 at opposite ends thereof. The roller 732 is arranged above the roller 730 in the vertical direction VD such that the rollers 730, 732 cooperatively define a gap 734 therebetween. The gap 734 is sized to receive the hose 240 therethrough. The rollers 730, 732 are arranged for interaction with the hose 240 to facilitate retraction of the hose 240 toward the tender trailer 200.

The illustrative rollers 730, 732 are identical or substantially identical to one another. Using the roller 730 as an example, the roller 730 defines a V-shaped profile. In some embodiments, the rollers 730, 732 are coupled to the guide brackets 720, 722 to permit adjustment of the gap 734 between the rollers 730, 732 in the vertical direction VD. More specifically, in some embodiments, the roller 732 is translatable in the vertical direction VD along the slots (e.g., the slot 726) formed in the guide brackets 720, 722 to adjust the gap 734 between the rollers 730, 732. Additionally, in some embodiments, a biasing element (e.g., a spring) 736 extends along the guide bracket 720 from the roller 730 to the roller 732 to bias the rollers 730, 732 toward one another in the vertical direction VD, whereas a biasing element (e.g., a spring) 738 extends along the guide bracket 722 from the roller 730 to the roller 732 to bias the rollers 730, 732 toward one another in the vertical direction VD.

The illustrative base plate 740 interconnects the guide brackets 720, 722 with the ramp 750. In some embodiments, the base plate 740 is a planar or substantially planar plate that includes a section 742 interconnected with the guide brackets 720, 722 and a section 744 interconnected with the ramp 750. The section 744 may have a width greater than a width of the section 742, at least in some embodiments.

The illustrative ramp 750 includes interconnected sections 752, 754 that cooperatively define a V-shaped exterior profile. Like the ramp 650, the ramp 750 provides a guide structure for repeatedly and reliably positioning the coupler 242 with the aid of gravity relative to the coupler 344. The sections 752, 754 of the ramp 750 define a continuous platform devoid of any notches, slots, of apertures. In some embodiments, the ramp 750 may have a single-piece construction.

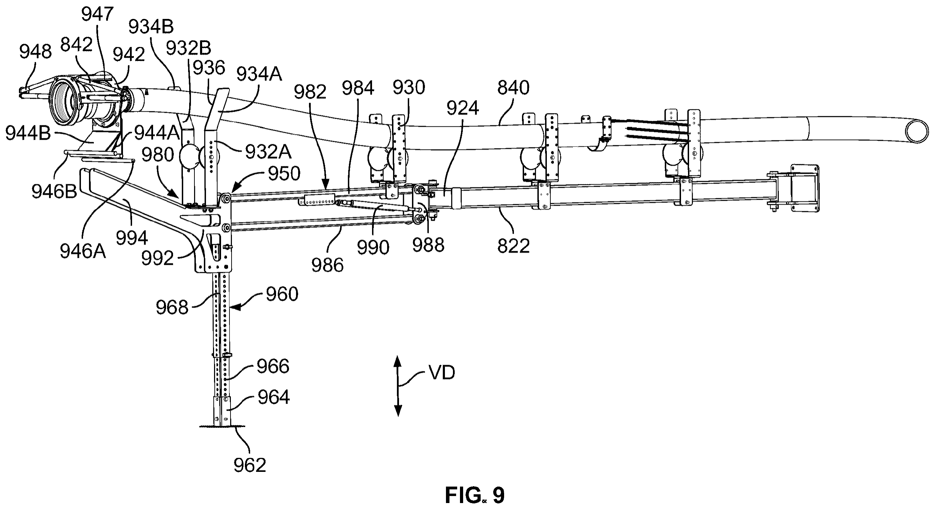

Referring now to FIGS. 8 and 9, in the context of agriculture and spraying operations, the tender trailer 800 may be embodied as a specialized trailer configured to perform various functions such as storing, mixing, and dispensing of liquids (e.g., fertilizers and/or pesticides) to the sprayer 10 or the sprayer 310. In such embodiments, the tender trailer 800 may include one or more product tanks (not shown) for supplying fluid to the sprayer 10 or the sprayer 310. As a result, the tender trailer 800 may be said to "tend" or support the sprayer 10 or the sprayer 310 in use thereof and provide a mobile liquid source to minimize downtime of the sprayer 10 or the sprayer 310 during refill periods. As described in greater detail below, in use of the tender trailer 800 and the sprayer 10 or the sprayer 310, a hose 840 carried by the tender trailer 800 is fluid coupled to the sprayer 10 or the sprayer 310 using one or more coupling systems envisioned by the present disclosure.

The illustrative tender trailer 800 includes a chassis or mainframe 810 supporting a plurality of wheels 812 for movement relative to the ground 40. The tender trailer 800 includes a tender arm assembly 820 movably coupled to the chassis 810 via a hitch assembly 830 affixed to the chassis 810. The tender arm assembly 820 illustratively guides the hose 840 that extends from the tender trailer 800 toward the sprayer 10 or the sprayer 310. The hose 840 is configured to conduct fluid supplied by the tender trailer 800 to the sprayer 10 or the sprayer 310 in use thereof.

In the illustrative embodiment, the tender arm assembly 820 supports a coupling system 850 that is coupled to the hose 840. The coupling system 850 is configured to retract the hose 840 toward the tender trailer 800 to locate a coupler 842 (e.g., a female coupler similar to the coupler 242) connected to the hose 840 relative to a male coupler (not shown) similar to the coupler 344. In doing so, the coupling system 850 facilitates repeated and consistent connection between the couplers in use of the tender trailer 800 and the sprayer 10 or the sprayer 310. The coupling system 850 includes a collection of devices each configured to assist in retracting the hose 840 toward the tender trailer 800.

In some embodiments, the coupling system 850 automatically retracts the hose 840 such that the coupler 842 has a predetermined or reference position relative to the male coupler once the coupler 842 has been de-coupled or disconnected from the male coupler. In such embodiments, the coupling system 850 may be embodied as an automatic or semi-automatic retractable coupling system. Additionally, in some embodiments, the coupling system 850 enables six degrees of freedom of movement (i.e., three-dimensional translation and rotation) of the couplers relative to one another to provide a flexible and maneuverable connection therebetween in use of the tender trailer 800 and the sprayer 10 or the sprayer 310.

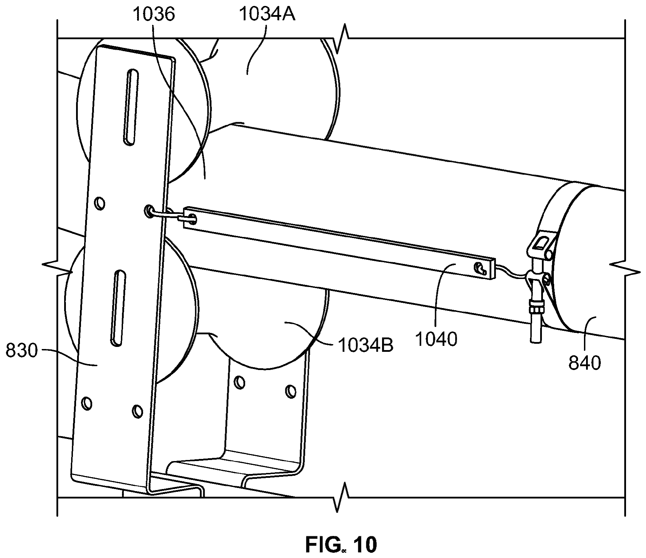

The tender arm assembly 820 is illustratively movable relative to the chassis 810 between a stowed position (not shown) and a deployed position 862 shown in FIGS. 8 and 9. In the stowed position, a tender arm 822 of the tender arm assembly 820 is coupled to a sidewall 812 of the chassis 810 via a latch mechanism 870 when the latch mechanism 870 is in an engaged state (not shown). In the engaged state thereof, the latch mechanism 870 constrains the tender arm 822 against rotation relative to the sidewall 812. It should be appreciated that the couplers are de-coupled from one another in the stowed position of the tender arm assembly 820. The tender arm 822 extends parallel or substantially parallel to the sidewall 812 in the stowed position of the tender arm assembly 820. In the deployed position 862, the tender arm 822 is de-coupled from the sidewall 812 of the chassis 810 when the latch mechanism 870 is in a disengaged state 874. In the disengaged state 874 thereof, the latch mechanism 870 permits the tender arm 822 to rotate (i.e., to swing outwardly) relative to the sidewall 812. The couplers are connected to one another when the tender arm assembly 820 is in the deployed position 862. The tender arm 822 extends perpendicular or substantially perpendicular to the sidewall 812 in the deployed position 862 of the tender arm assembly 820. In some embodiments, rotation of the tender arm 822 relative to the sidewall 812 is driven by an actuator (not shown) included in, or otherwise coupled to, the hitch assembly 830. The illustrative tender arm assembly 820 includes two identical or substantially identical guide brackets 830 coupled to the tender arm 822 along the length thereof. The two guide brackets 830 are arranged to guide the hose 840 along the length of the tender arm 822 and are spaced apart from one another along the length of the tender arm 822. In the illustrative arrangement, using the guide bracket 830A as an example, the guide bracket 830A includes a pair of identical or substantially identical L-shaped bracket structures 832A, 832B coupled to one another and aligned along the length of the tender arm 822. At least one roller 834 is coupled to each one of the bracket structures 832A, 832B such that the roller(s) 834 extends between the bracket structures 832A, 832B. In some embodiments, two rollers 1034A, 1034B may be coupled to each one of the bracket structures 832A, 832B as shown in FIG. 10.

The roller(s) 834 is arranged for interaction with the hose 840 to facilitate retraction of the hose 840 toward the tender trailer 800. In the illustrative embodiment, the roller(s) 834 defines a V-shaped profile. In some embodiments, the roller(s) 834 include only one roller arranged in contact with the hose 840 such that the roller 834 is at least partially positioned below the hose 840 in the vertical direction VD.

The illustrative coupling system 850 includes a stand assembly 950 that is coupled to the tender arm 822 proximate an end 924 thereof. The stand assembly 950 is arranged to support the coupler 842 for connection to the corresponding male coupler. In some embodiments, in use of the tender trailer 800, when the tender arm assembly 820 is in the deployed position 862, the stand assembly 950 is manually coupled to the tender arm 822 and positioned in contact with the ground 40 or other support surface. In such embodiments, once the stand assembly 950 is manually coupled to the tender arm 222 and in contact with the ground 40, elements of the tender arm assembly 820 (e.g., the stand guide brackets 930, 932) may be mounted to the stand assembly 950. In any case, the stand assembly 950 includes an upright stand 960 and a stand mount 980.

The upright stand 960 of the stand assembly 950 is illustratively arranged to contact the ground 40 or other support surface. In some embodiments, the upright stand 960 includes a base plate 962 arranged to directly contact the ground 40, a housing 964 coupled to the base plate 962, a rail section 966 coupled to the housing 964, and a rail section 968 coupled to the rail section 966. Additionally, in some embodiments, the section 968 at least partially receives the section 966 such that the section 968 is movable relative to the section 966 in the vertical direction VD to adjust an overall height of the upright stand 960.

The stand mount 980 is illustratively coupled to the tender bar 822 and the upright stand 960. In some embodiments, the stand mount 980 includes a coupling linkage 982 configured for connection to the tender arm 822 that includes a link 984, a link 986, a latch mechanism 988 interconnecting the links 984, 986, and a shock/spring 990. In some embodiments, the shock/spring 990 may be embodied as a pneumatically-operated shock/spring 990. The links 984, 986 extend parallel to one another between the latch mechanism 988 and an attachment base 992 of the stand mount 980. The latch mechanism 988 is configured for direct connection to the end 924 of the tender arm 822. The shock/spring 990 is coupled to the latch mechanism 988 and to the link 984 such that the shock/spring 990 extends oblique to the link 984. In some embodiments, operation of the shock/spring 990 may provide additional stability to the stand assembly 950 and facilitate steady support of the hose 840 using the tender arm assembly 820 in the deployed position 862. The attachment base 992 is configured to receive the section 968 to secure the attachment base 992 to the upright stand 960.

In some embodiments, the stand mount 980 includes a ramp 994 that extends oblique to the upright stand 960 when the attachment base 992 is secured to the upright stand 960. Additionally, in some embodiments, the attachment base 992 and the ramp 994 may be integrally formed as a single-piece structure. In any case, the ramp 994 provides a guide structure for repeatedly and reliably positioning the coupler 842 with the aid of gravity relative to the corresponding male coupler.

In some embodiments, the coupler 842 is identical or substantially identical to the coupler 242. As such, in some embodiments, the illustrative coupler 842 includes an annular coupling flange 942 and guide flaps 944A, 944B coupled to the coupling flange 942. More specifically, each guide flap 944A, 944B is coupled to the coupling flange 942 at one end thereof and to a corresponding guide rod 946A, 946B at another end opposite the one end. The guide rods 946A, 946B are illustratively slidable along the ramp 994 to facilitate retraction of the hose 840 toward the tender trailer 800 and positioning of the coupler 842 relative to the corresponding male coupler in use of the tender trailer 800 and the sprayer 10 or the sprayer 310. The guide flaps 944A, 944B are arranged oblique to one another and cooperate to define a V-shaped exterior profile. The coupler 842 also includes handles 947 coupled to the annular flange 942 and handles 948 coupled to the annular flange 942 opposite the handles 947. The handles 947, 948 extend outwardly away from the coupling flange 942 on opposite sides thereof and are configured to be grasped by a grabbing mechanism of the sprayer 10 or the sprayer 310 to advance the coupler 842 toward the corresponding male coupler when connecting the couplers.

In some embodiments, in addition to the two guide brackets 830, the tender arm assembly 820 may include two stand guide brackets 930, 932. Each of the stand guide brackets 930, 932 is adapted to be mounted to the stand assembly 950. More specifically, the stand guide bracket 930 is mounted to the link 984 of the stand mount 980, whereas the stand guide bracket 932 is mounted to the attachment base 992 of the stand mount 980. In some embodiments, although the stand guide bracket 930 may have a height different from each of the guide brackets 830, the stand guide bracket 930 may be similar or substantially similar to each of the guide brackets 830. Additionally, in some embodiments, the stand guide bracket 932 may have a height different from the stand guide bracket 930 and the two guide brackets 830, and the stand guide bracket 932 may include bracket structures 932A, 932B having corresponding upper sections 934A, 934B that define a V-shaped void 936 therebetween.

Referring now to FIG. 10, in some embodiments, rollers 1034A, 1034B may be coupled to and supported by each one of the two guide brackets 830 and/or the stand guide brackets 930, 932 such that the rollers 1034B, 1034B define a gap 1036 through which the hose 840 may extend. In some embodiments, each of the rollers 1034A, 1034B may have a V-shaped profile. Additionally, in some embodiments, a tensioning cord 1040 (e.g., a bungee cord, ratchet strap, or the like) may be coupled to the hose 840 and the guide bracket 830 to retract the hose 840 toward the tender trailer 800.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A tender arm system for use with a work machine (10), the tender arm system comprising:
a tender arm assembly (220, 820) configured to guide a hose (240, 840); and
a coupling system (250, 850) supported by the tender arm assembly (220, 820) that is configured to retract the hose (240, 840) to locate a first coupler (242, 842) connected to the hose (240, 840) relative to a second coupler (344) supported by a work machine (10) and to facilitate connection between the first coupler (242, 842) and the second coupler (344), wherein the coupling system (250, 850) includes a carrier structure (610, 710) coupled to the tender arm assembly (220, 820) proximate an end thereof that is arranged for interaction with the first coupler (242, 842), and wherein the carrier structure (610, 710) includes a carrier bracket (630) sized to at least partially receive the first coupler (242, 842) and a ramp (650, 750) pivotally coupled to the carrier bracket (630) that extends oblique to the carrier bracket (630).

2. The tender arm system of claim 1, wherein the first coupler (242, 842) is slidable along the ramp (650, 750) to position the first coupler (242, 842) relative to the second coupler (344).

3. The tender arm system of claim 1 or 2, wherein the first coupler (242, 842) includes:
a coupling flange (642, 942);
a pair of guide flaps (644A, 644B, 944A, 944B) each coupled to the coupling flange (642, 942); and
a pair of guide rods (646A, 646B, 946A, 946B) each coupled to a corresponding one of the pair of guide flaps (644A, 644B, 944A, 944B).

4. The tender arm system of one of the claims 1 to 3, wherein:
the pair of guide rods (646A, 646B, 946A, 946B) are slidable along the ramp (650, 750) to position the first coupler (242, 842) relative to the second coupler (344); and
the pair of guide flaps (644A, 644B, 944A, 944B) are arranged oblique to one another and cooperate to define a V-shaped exterior profile.

5. The tender arm system of one of the claims 1 to 4, wherein:
the ramp (650) includes a first guide bar (652) that extends over a length of the ramp (650), a second guide bar (654) arranged parallel to the first guide bar (652) that extends over the length of the ramp (650), and a third guide bar (656) that interconnects the first and second guide bars (652, 654); and
the first, second, and third guide bars (652, 654, 656) cooperate to at least partially enclose a slot.

6. The tender arm system of claim 4 or 5, wherein each of the pair of guide rods (646A, 646B) directly contacts and is arranged perpendicular to the first guide bar (652) and the second guide bar (654).

7. The tender arm system of one of the claims 4 to 6, wherein the carrier structure (610, 710) includes a turnbuckle (670) coupled to the tender arm assembly (220, 820) and the ramp (650, 750) to adjust a pitch of the ramp (650, 750) relative to the carrier bracket (630).

8. The tender arm system of one of the claims 1 to 7, wherein the carrier structure (610, 710) includes at least one roller (690, 730, 732, 834, 1034) supported by the carrier bracket (630) that is configured to directly contact the first coupler (242, 842).

9. A tender trailer (200, 800) for a work machine (10), the tender trailer (200, 800) comprising:
a chassis;
a tender arm system according to one of the claims 1 to 8, wherein the tender arm assembly (220, 820) of the tender arm system is coupled to the chassis that is configured to guide the hose (240, 840) extending from the tender trailer (200, 800) toward a work machine (10).
